(19) Europäisches Patentamt
European Patent Office
Office européen des brevets

(11) EP 1 109 243 A2

(12) **EUROPEAN PATENT APPLICATION**

(43) Date of publication:
20.06.2001 Bulletin 2001/25

(51) Int Cl.7: **H01M 10/40**

(21) Application number: 00127375.4

(22) Date of filing: 13.12.2000

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **14.12.1999 JP 35470699**

(71) Applicant: **SONY CORPORATION
Tokyo 141 (JP)**

(72) Inventor: **Ito, Hidetoshi
Shinagawa-ku, Tokyo (JP)**

(74) Representative: **MÜLLER & HOFFMANN
Patentanwälte
Innere Wiener Strasse 17
81667 München (DE)**

(54) **Secondary battery**

(57) Disclosed is a secondary battery capable of obtaining high energy density and having improved charging/discharging cycle characteristic and shelf stability characteristic. A rolled electrode body obtained by rolling strip-shaped positive and negative electrodes via separators is provided on the inside of a battery can. The negative electrode contains silicon or a silicon compound. The separators are impregnated with a liquid electrolyte. The electrolyte contains $LiN(CF_3SO_2)_2$, $LiC(CF_3SO_2)_3$, or the like and concentration of at least one of $LiPF_6$, $LiBF_4$, and $LiAsF_6$ in the electrolyte is lower than 0.1 mol/dm$^3$. Production of hydrogen fluoride causing decomposition of $LiPF_6$, $LiBF_4$, or $LiAsF_6$ can be suppressed and the concentration of hydrogen fluoride in the electrolyte can be suppressed. Thus, deactivation of the negative electrode is prevented.

FIG.1

## EP 1 109 243 A2

**Description**

BACKGROUND OF THE INVENTION

Field of the Invention

The present invention relates to a secondary battery having a negative electrode containing silicon (Si) or a silicon compound.

Description of the Related Art

With recent significant progress in electronic techniques, smaller and lighter electronic devices are realized. In association with this, a battery used as a power source of a portable electronic device is also demanded to be smaller and lighter and to have higher energy density. Conventionally, as secondary batteries for general use, aqueous solution secondary batteries such as lead accumulator and nickel-cadmium battery are in the mainstream. The aqueous secondary batteries have excellent output density and charging/discharging cycle characteristic. On the other hand, the aqueous secondary batteries have problems such as heavy weight and low energy density.

Recently, in order to realize high energy density, a nonaqueous electrolyte secondary battery using lithium ions as electrode reaction species has been being actively studied and developed. Examples of such secondary batteries are a lithium secondary battery having a negative electrode containing a metal lithium or lithium alloy and a lithium ion secondary battery having a negative electrode made of a material capable of occluding and releasing lithium ions. The lithium secondary battery has excellent characteristics of light weight , high energy density, and small self discharge. In the lithium secondary battery, however, as the charging and discharging are repeated, the lithium metal is separated out as a dendrite crystal in the negative electrode at the time of charging. Consequently, reduction in capacity of the lithium secondary battery is conspicuous, so that a sufficient charging/discharging cycle characteristic cannot be obtained.

On the other hand, although the lithium ion secondary battery cannot obtain the energy density as high as that of the lithium secondary battery, the charging/discharging reaction progresses when the lithium ion is occluded and released in the negative electrode. The lithium metal is not therefore separated out as a dendrite in the negative electrode at the time of charging. Thus, the lithium ion secondary battery can obtain an excellent charging/discharging cycle characteristic. A lithium ion secondary battery using a carbonaceous material such as graphite or hard carbon for the negative electrode has already been put into practical use as a power source of a notebook-size personal computer, camcorder, portable audio device, portable telephone, or the like.

In order to be adapted to a smaller and lighter electronic device in recent years, the lithium ion secondary battery is also desired to have higher energy density. It is therefore examined to realize higher energy density of a lithium ion secondary battery by using silicon or a silicon compound capable of occluding and releasing a larger amount of lithium ion as compared with a carbonaceous material for the negative electrode.

In the case of using silicon or a silicon compound for the negative electrode, however, when lithium hexafluorophosphate ($LiPF_6$), lithium tetrafluoroborate ($LiBF_4$), lithium hexafluoroarsenate ($LiAsF_6$) or the like is used as a lithium salt in a manner similar to a conventional lithium ion secondary battery, a problem such that sufficient charging/discharging cycle characteristic and shelf stability characteristic cannot be obtained occurs. One of the causes of the problem is considered that the silicon compound is dissolved by hydrogen fluoride (HF) produced by decomposition of the lithium salt and the negative electrode is deactivated.

SUMMARY OF THE INVENTION

The invention has been achieved in consideration of the problems and its object is to provide a secondary battery capable of obtaining high energy density with improved charging/discharging cycle characteristic and shelf stability characteristic.

A secondary battery according to the invention comprises a positive electrode, a negative electrode, and an electrolyte, wherein the negative electrode contains silicon (Si) or a silicon compound, and the electrolyte contains at least one material selected from the group consisting of lithium hexafluorophosphate ($LiPF_6$), lithium tetrafluoroborate ($LiBF_4$) and lithium hexafluoroarsenate($LiAsF_6$) in a total concentration lower than 0.1 mol/dm$^3$.

A secondary battery according to the invention comprises a positive electrode, a negative electrode, and an electrolyte, wherein the negative electrode contains silicon (Si) or a silicon compound, and the electrolyte contains at least one material selected from the group consisting of a lithium salt expressed by Chemical Formula 1 and a lithium salt expressed by Chemical Formula 2.

[Chemical Formula 1]

$$LiNR_1R_2$$

where, $R_1$ denotes either fluorine (F), $C_aF_bH_{2a+1-b}$-$SO_2$ or $C_aF_bH_{2a+1-b}$-O-$SO_2$. each of a and b denotes a natural number satisfying the relation of b≤2a+1, $R_2$ denotes either $C_cF_dH_{2c-1-d}$-$SO_2$, or $C_cF_dH_{2c+1-d}$-O-$SO_2$, and each of c and d denotes a natural number satisfying the relation of d≤2c+1.

[Chemical Formula 2]

$$LiCR_3R_4R_5$$

where, $R_3$ denotes either fluorine(F), $C_eF_fH_{2e+1-f}$-$SO_2$ or $C_eF_fH_{2e+1-f}$-O-$SO_2$, each of e and f denotes a natural number satisfying the relation of f≤2e+1, $R_4$ denotes either $C_gF_hH_{2g+1-h}$-$SO_2$ or $C_gF_hH_{2g+1-h}$-O-$SO_2$, each of g and h denotes a natural number satisfying the relation of h≤2g+1, $R_5$ denotes either $C_iF_jH_{2i+1-j}$-$SO_2$ or $C_iF_jH_{2i+1-j}$-O-$SO_2$ and each of i and j denotes a natural number satisfying the relation of j≤2i+1.

A secondary battery according to the invention comprises a positive electrode, a negative electrode, and an electrolyte, wherein, the negative electrode has a structure of a strip shape in which a negative electrode mixture layer is provided on one side or both sides of a negative electrode collector layer made of copper foil, the negative electrode mixture layer containing a binder and a negative electrode material containing silicon (Si) or a silicon compound, the positive electrode has a structure of a strip shape in which a positive electrode mixture layer is provided on one side or both sides of a positive electrode collector layer made of aluminum foil, the positive electrode mixture layer containing a binder and a positive electrode material containing either a lithium composite oxide, a lithium composite sulfide or a lithium composite nitride, the negative electrode and the positive electrode are spirally wound on each other with a porous film of the polyolefin system holding the electrolyte or a high molecular compound holding the electrolyte in between, and the outermost periphery of the spirally-wound positive and negative electrodes is fixed by an adhesive tape containing an adhesive of the silicone system, and the electrolyte contains at least one material selected from the group consisting of a lithium salt expressed by Chemical Formula 1 and a lithium salt expressed by Chemical Formula 2.

In the secondary battery according to the invention, a concentration of at least one of $LiPF_6$, $LiBF_4$ and $LiAsF_6$ in the electrolyte is lower than 0.1 mol/dm$^3$. Consequently, production of hydrogen fluoride is suppressed and deactivation of the negative electrode is prevented.

In the secondary battery according to the invention, the electrolyte contains at least one of lithium salts expressed by Chemical Formulas 1 and 2. Consequently, excellent chemical stability is achieved and high ion conductivity is obtained. Thus, the concentration of hydrogen fluoride in the electrolyte can be suppressed and deactivation of the negative electrode is prevented.

Other and further objects, features and advantages of the invention will appear more fully from the following description.

BRIEF DESCRIPTION OF THE DRAWING

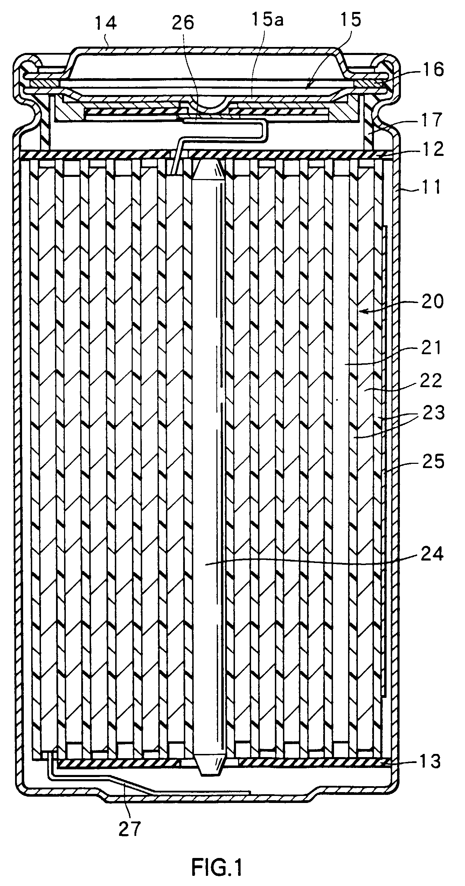

Fig. 1 is a cross section showing the configuration of a secondary battery according to an embodiment of the invention.

DETAILED DESCRIPTION OF THE PREFERRED EMBODIMENTS

An embodiment of the invention will be described in detail hereinbelow with reference to the drawings.

Fig. 1 is a cross section showing the configuration of a secondary battery according to an embodiment of the invention. The secondary battery is of what is called a cylindrical type. In a battery can 11 having a substantially hollow cylindrical column shape, a rolled electrode body 20 obtained by rolling strip-shaped positive electrode 21 and negative electrode 22 sandwiching a separator 23 is provided. The battery can 11 is made of, for example, iron (Fe) plated with nickel (Ni). One end of the battery can 11 is closed and the other end is open. A pair of insulating plates 12 and 13 are disposed perpendicular to the peripheral face of the roll so as to sandwich the rolled body 20.

A battery cover 14 and a safety valve mechanism 15 and a positive temperature coefficient (PTC) device 16 which are provided on the inside of the battery cover 14 are attached to the open end of the battery can 11 by being caulked via a gasket 17 and the battery can 11 is sealed. The battery cover 14 is made of, for example. a material similar to that of the battery can 11. The safety valve mechanism 15 is electrically connected to the battery cover 14 via the PTC device 16. When an internal short circuit occurs or the internal pressure of the battery increases to a predetermined value or higher due to heating from the outside or the like, a disk plate 15a is turned upside down, thereby disconnecting the electrical connection between the battery cover 14 and the rolled electrode body 20. The PTC device 16 is used to limit a current by an increase in resistance value when the temperature rises to thereby prevent abnormal heating caused by a heavy current. The PTC device 16 is made of, for example, barium titanate based semiconductor ceramics. The gasket 17 is made of, for instance, an insulating material.

The rolled electrode body 20 is rolled around, for example, a center pin 24 as a center and the outermost peripheral portion is fixed by an adhesive tape 25. The adhesive tape 25 is made of, for example, polyethylene, polypropylene, polyvinyl chloride, polyester, polyimide, fluororesin, or the like. A positive electrode lead 26 made of aluminum (A1) or the like is connected to the positive electrode 21 of the rolled electrode body 20, and a negative electrode lead 27 made of nickel or the like is connected to the negative electrode 22. The positive electrode lead 26 is welded to the safety valve mechanism 15, thereby being electrically connected to the battery cover 14. The negative electrode lead 27 is welded and electrically connected to the battery can 11.

The positive electrode 21 has, for example, a structure in which a positive electrode mixture layer is provided on one side or both sides of a positive electrode collector layer. The positive electrode collector layer is made of, for example, metal foil such as aluminum foil, nickel foil, or stainless foil. The positive electrode mixture layer contains, for example, a positive electrode active material, a conducting agent such as graphite, and a binder such as polyvinylidene fluoride. As the positive electrode active material, one or more of a lithium composite oxide, a lithium composite sulfide, and a lithium composite nitride each containing a lithium, a metallic oxide and a metallic sulfide containing no lithium, such as $V_2O_5$ or $TiS_2$, a specific high polymer material, and the like are used in accordance with a purpose.

Especially, in order to increase the energy density, it is preferable to use a lithium composite oxide expressed by $Li_xM_yO_z$ as the positive electrode active material. M denotes one or more transition metal elements. For example, it is preferable to use at least one of manganese (Mn), cobalt (Co), nickel (Ni), and chromium (Cr). Examples of such lithium composite oxides are $LiMn_2O_4$, $Li_{1+p}Mn_{2-p}O_4$, $LiMn_{2-p}Cr_pO_4$, $LiMn_{2-p}Co_pO_4$, $LiCoO_2$, $LiNiO_2$, and $LiNi_pCo_{1-p}O_2$, where $0 < p < 1$.

The negative electrode 22 has, for example in a manner similar to the positive electrode 21, a structure in which a negative electrode mixture layer is provided on both sides or one side of a negative electrode collector layer. The negative electrode collector layer is made of, for instance, metal foil such as copper (Cu) foil, nickel foil, or stainless steel foil. The negative electrode mixture layer contains silicon or a silicon compound as a negative electrode material capable of occluding and releasing lithium ions and a binder such as polyvinylidene fluoride. Examples of the silicon compounds are $SiO$, $SiO_2$, $SiC$, $SiB_4$, $SiB_6$, $Si_3N_4$, $Si_2N_2O$, $CaSi_2$, $CoSi_2$, $CrSi_2$, $Cu_5Si_2$, $Cu_5Si$, $FeSi_2$, $Mg_2Si$, $MnSi_2$, $MoSi_2$, $NbSi_2$, $NiSi_2$, $TaSi_2$, $TiSi_2$, $VSi_2$, $WSi_2$ and $ZnSi_2$. Each of the silicon compounds may have a stoichiometric composition or a nonstoichiometric composition. The negative electrode mixture layer may contain silicon and one or more silicon compounds, or contain two or more silicon compounds.

The negative electrode mixture layer may contain, in addition to silicon or a silicon compound, another negative electrode material such as a lithium metal or lithium alloy, a carbonaceous material capable of occluding and releasing lithium ions, an inorganic compound, or a high polymer material. Among them, the carbonaceous material is preferable since a change in the crystal structure occurring at the time of charging/discharging is very small and the carbonaceous material can also function as a conducting agent. Examples of the carbonaceous materials are pyrocarbons, cokes, graphite, carbon black, glassy carbon, high polymer organic compound calcined materials, carbon fiber, and activated carbon. The cokes include petroleum coke, pitch coke, and coal coke. The carbon black includes acetylene black. The high polymeric compound calcined material is a material obtained by calcining a high polymeric material such as phynolic resin or furan resin at an appropriate temperature so as to be carbonated. Examples of inorganic compounds are $MoO_2$, $TiS_2$, and $LiCo_{0.5}N$. Examples of the high polymeric materials are polyacetylene, polyacene, and polyparaphenylene.

The separator 23 is made by, for example, a porous film made of a polyolefin-based material such as polypropylene or polyethylene or a porous film made of an inorganic material such as ceramic nonwoven cloth. A structure in which two or more kinds of porous films are stacked may be also used.

The separator 23 is impregnated with a liquid electrolyte. The electrolyte is obtained by, for example, dissolving a lithium salt in a nonaqueous solvent. Appropriate nonaqueous solvents are, for example, propylene carbonate, ethylene carbonate, diethyl carbonate, dimethyl carbonate, methy ethyl carbonate, 1,2-dimethoxyethan, 1,2-diethoxyethan, $\gamma$-butyrolactone, tetrahydrofuran, 1,3-dioxolane, diethylether, sulfolane, methyl sulfolane, acetonitrile, and propionitrile. Two or more kinds of the above materials may be mixed and used.

The concentration of the lithium salt in the electrolyte is preferably about 0.4 to 2.0 $mol/dm^3$. Preferably, at least one of the lithium salts expressed by a general formula of Chemical Formula 3 and the lithium salts expressed by a general formula of Chemical Formula 4 is contained.

[Chemical Formula 3]

$$LiNR_1R_2$$

where, $R_1$ denotes any of fluorine atom, $C_aF_bH_{2a+1-b}$-SO$_2$, and $C_aF_bH_{2a+1-b}$-O-SO$_2$, each of a and b denotes a natural number satisfying the relation of $b \leq 2a + 1$, $R_2$ denotes $C_cF_dH_{2c+1-d}$-SO$_2$ or $C_cF_dH_{2c+1-d}$-O-SO$_2$, and each of c and d denotes a natural number satisfying the relation of $d \leq 2c + 1$.

[Chemical Formula 4]

$$LiCR_3R_4R_5$$

where, $R_3$ denotes any of fluorine atom, $C_eF_fH_{2e+1-f}$-SO$_2$, and $C_eF_fH_{2e+1-f}$-O-SO$_2$, each of e and f denotes a natural number satisfying the relation of $f \leq 2e + 1$, $R_4$ denotes $C_gF_hH_{2g+1-h}$-SO$_2$ or $C_gF_hH_{2g+1-h}$-O-SO$_2$, each of g and h denotes a natural number satisfying the relation of $h \leq 2g + 1$, $R_5$ denotes $C_iF_jH_{2i+1-j}$-SO$_2$ or $C_iF_jH_{2i+1-j}$-O-SO$_2$, and each of i and j denotes a natural number satisfying the relation of $j \leq 2i + 1$.

These lithium salts have high chemical stability and can obtain excellent ion conductivity. Among them, the lithium salts in which each of a and c in Chemical Formula 3 is a natural number which is equal to or smaller than 4 and the lithium salts in which each of e, g and i in Chemical Formula 4 is a natural number which is equal to or smaller than 4 are especially preferable since they have high solubility in a nonaqueous solvent and high ion conductivity. Specifically, LiN(CF$_3$SO$_2$)$_2$, LiN(C$_2$F$_5$SO$_2$)$_2$, LiC(CF$_3$SO$_2$)$_3$, LiC(C$_2$F$_5$SO$_2$)$_3$, and the like can be mentioned.

The electrolyte may contain another lithium salt in addition to or in place of at least one of the lithium salts expressed by Chemical Formulae 3 and 4. Examples of another lithium salt are LiClO$_4$, LiB(C$_6$H$_5$)$_4$, LiCl, LiBr, CH$_3$SO$_3$Li and CF$_3$SO$_3$Li.

There are other lithium salts LiPF6, LiBF$_4$ and LLASF$_6$. Preferably, the concentration of at least one of the lithium salts in the electrolyte is lower than 0.1 mol/dm$^3$. More preferably, the total concentration of the lithium salts is lower than 0.1 mol/dm$^3$ for the following reason. When moisture exists in a battery system or the lithium salts are heated, the lithium salts are decomposed and hydrogen fluoride is produced, causing deterioration in cycle characteristic and shelf stability characteristic. That is, the lower the concentration of hydrogen fluoride is, the more it is preferable. For example, the concentration is preferably lower than 0.05 percent by weight. The concentration lower than 0.1 mol/dm$^3$ includes 0 mol/dm$^3$ and the concentration lower than 0.05 percent by weight includes 0 percent by weight.

For example, this secondary battery can be manufactured as follows.

First, a positive electrode mixture is prepared by mixing a positive electrode active material, a conducting agent, and a binder. The positive electrode mixture is dispersed in a solvent of N-methyl-2-pyrrolidone or the like to thereby obtain a positive electrode mixture slurry. The positive electrode mixture slurry is applied on a positive electrode collector layer, dried, and compression molded, thereby forming a positive electrode mixture layer. In such a manner, the positive electrode 21 is fabricated.

Silicon or a silicon compound, another negative electrode material as necessary, and a binder are mixed and the mixture is dispersed in a solvent of N-methyl-2-pyrrolidone or the like to thereby obtain a negative electrode mixture slurry. The negative electrode mixture slurry is applied on a negative electrode collector layer, dried, and compression molded, thereby forming the negative electrode mixture layer. In such a manner, the negative electrode 22 is fabricated.

Subsequently, the positive electrode lead 26 is attached to the positive electrode collector layer by welding or the like. A negative electrode lead 27 is attached to the negative electrode collector layer by welding or the like. After that, the positive electrode 21 and the negative electrode 22 are rolled sandwitching the separator 23, the top of the positive electrode lead 26 is welded to the safety valve mechanism 15, the top of the negative electrode lead 27 is welded to the battery can 11, and the rolled positive electrode 21 and negative electrode 22 are sandwiched by the pair of insulating plates 12 and 13 and enclosed in the battery can 11. After the positive electrode 21 and the negative electrode 22 are enclosed in the battery can 11, the electrolyte is injected into the battery can 11 and the separator 23 is impregnated with the electrolyte. The battery cover 14, the safety valve mechanism 15, and the PTC device 16 are fixed to the open end of the battery can 11 via the gasket 17 by caulking. In such a manner, a secondary battery shown in Fig. 1 is formed.

The secondary battery acts as follows.

When the secondary battery is charged, for example, the lithium ions are released from the positive electrode 21 and occluded by the negative electrode 22 via the electrolyte with which the separator 23 is impregnated. When the secondary battery is discharged, for example, the lithium ions are released from the negative electrode 22 and occluded by the positive electrode 21 via the electrolyte with which the separator 23 is impregnated. Since the concentration of at least one of $LiPF_6$, $LiBF_4$ and $LiAsF_6$ in the electrolyte is set to be lower than 0.1 mol/dm$^3$, hydrogen fluoride due to the decomposition is not produced much. Consequently, the concentration of hydrogen fluoride in the electrolyte is low. Thus, deactivation of the negative electrode 22 caused by hydrogen fluoride is prevented.

In the secondary battery according to the embodiment as described above, the concentration of at least one of $LiPF_6$, $LiBF_4$ and $LiAsF_6$ in the electrolyte is set to be lower than 0.1 mol/dm$^3$, so that production of hydrogen fluoride due to the decomposition can be suppressed and the concentration of hydrogen fluoride in the electrolyte can be suppressed to be low. Thus, deactivation of the negative electrode 22 can be prevented even when silicon or a silicon compound is used for the negative electrode 22. High energy density can be therefore obtained and the charging/discharging cycle characteristic and the shelf stability characteristic can be also improved.

Since the electrolyte contains at least one of the lithium salts expressed by Chemical Formulas 3 and 4, excellent chemical stability is achieved and high ion conductivity can be obtained. The concentration of hydrogen fluoride in the electrolyte can be therefore suppressed to be low. Thus, deactivation of the negative electrode 22 can be prevented even when silicon or a silicon compound is used for the negative electrode 22.

Examples

Further, examples of the invention will be described in detail by referring to Fig. 1.

Examples 1 to 9

First, petroleum coke was calcined at 3100 degrees in an inert gas air flow and the resultant calcined material was pulverized, thereby obtaining powders of a carbonaceous material. Subsequently, a negative electrode mixture was prepared by mixing 20 parts by weight of the obtained carbonaceous material, 80 parts by weight of $Si_2N_2O$, and 10 parts by weight of a polyvinylidene fluoride resin as a binder. The negative electrode mixture was dispersed in N-methyl-2-pyrrolidone as a solvent to thereby obtain a negative electrode mixture slurry. The negative electrode mixture slurry was applied on both sides of a negative electrode collector layer made of copper foil in a strip shape having a thickness of 15 μm, dried and compression molded, thereby forming the negative electrode mixture layer. In such a manner, the negative electrode 22 was fabricated. The thickness of the negative electrode mixture layer on each of both sides was 80 μm, the length in the width direction (hereinbelow, called a width) of the negative electrode 22 was 54.5 mm, and the length in the longitudinal direction (hereinbelow, called a length) was 520 mm. After fabricating the negative electrode 22, the negative electrode lead 27 made of copper was attached to one end of the negative electrode 22.

A positive electrode mixture was prepared by mixing 91 parts by weight of $LiMn_2O_4$ powders having an average particle diameter of 15 μm as a positive electrode active material, 6 parts by weight of graphite as a conducting agent, and 3 parts by weight of a polyvinylidene fluoride resin as a binder. The positive electrode mixture was dispersed in N-methyl-2-pyrrolidone as a solvent, thereby obtaining a positive electrode mixture slurry. After that, the positive electrode mixture slurry was applied on both sides of a positive electrode collector layer made of aluminum foil in a strip shape having a thickness of 20 μm, dried, and compression molded, thereby forming the positive electrode mixture layer. In such a manner, the positive electrode 21 was fabricated. The thickness of the positive electrode mixture layer on each of both sides was set to 80 μm, the width of the positive electrode 21 was set to 53.5 mm, and the length was set to 470 mm. After fabricating the positive electrode 21, the positive electrode lead 26 made of aluminum was attached to one end of the positive electrode 21.

After forming the positive electrode 21 and the negative electrode 22, the separator 23 made by a fine porous polypropylene film having a thickness of 25 μm and a width of 58 mm was prepared. The negative electrode 22, separator 23, positive electrode 21 and separator 23 were stacked in this order and were rolled a number of times with the negative electrode 22 on the outside. After that, the outermost periphery was fixed by the adhesive tape 25 obtained by applying a silicon-based self-adhesive on a polyester film having a thickness of 25 μm. The rolled electrode body 20 having an outer diameter of 16.5 mm was thus fabricated.

After fabricating the rolled electrode body 20, the rolled electrode body 20 was sandwiched by a pair of insulating plates 12 and 13, the negative electrode lead 27 was welded to the battery can 11, the positive electrode lead 26 was welded to the safety valve mechanism 15, and the rolled electrode body 20 was enclosed in the battery can 11 made of iron which is nickel plated. The battery can 11 having an inner diameter of 17.5 mm and an outer diameter of 17.9 mm was used. After enclosing the rolled electrode body 20 into the battery can 11, the electrolyte was injected into the battery can 11.

The electrolyte obtained by dissolving a lithium salt into a nonaqueous solvent in which ethylene carbonate and dimethyl carbonate are mixed at the weight ratio of 3:7 was used. In Examples 1 to 9, the different kinds of the lithium salts and the different concentrations of the lithium salt in the electrolyte were used as shown in Tables 1 and 2. Specifically, in Examples 1 to 4, each of $LiN(CF_3SO_2)_2$, $LiN(C_2F_5SO_2)_2$, $LiC(CF_3SO_2)_3$, and $LiC(C_2F_5SO_2)_3$ was

dissolved at the concentration of 1.00 mol/dm$^3$. In Examples 5 to 9, $LiN(CF_3SO_2)_2$ was dissolved at the concentration of 1.00 mol/dm$^3$ and $LiPF_6$, $LiBF_4$, and $LiAsF_6$ were dissolved at respective concentrations shown in Table 2.

[Table 1]

| | Lithium Salt | Concentration of | Capacity maintaining ratio(%) | |
|---|---|---|---|---|
| | (1.00mol/dm$^3$) | hydrogen fluorine (% by weight) | 200$^{th}$cycle | stored for 30 days |
| Example 1 | $LiN(CF_3SO_2)_2$ | 0.002 | 90.5 | 99.2 |
| Example 2 | $LiN(C_2F_5SO_2)_2$ | 0.002 | 90.7 | 99.6 |
| Example 3 | $LiC(CF_3SO_2)_3$ | 0.002 | 91.1 | 99.2 |
| Example 4 | $LiC(C_2F_5SO_2)_3$ | 0.002 | 91.5 | 99.8 |

[Table 2]

| | Lithium Salt (mol/dm$^3$) | | | | Concentration of hydrogen fluoride (% by weight) | Capacity maintaining ratio(%) | |
|---|---|---|---|---|---|---|---|
| | $LiN(CF_3SO_2)_2$ | $LiPF_6$ | $LiBF_4$ | $LiAsF_6$ | | 200th cycle | stored for 30 days |
| Ex. 5 | 1.00 | 0.05 | - | - | 0.003 | 88.1 | 94.5 |
| Ex. 6 | 1.00 | 0.09 | - | - | 0.004 | 85.5 | 93.8 |
| Ex. 7 | 1.00 | - | 0.09 | - | 0.004 | 85.7 | 93.9 |
| Ex. 8 | 1.00 | - | - | 0.09 | 0.004 | 85.4 | 93.9 |
| Ex. 9 | 1.00 | 0.03 | 0.03 | 0.03 | 0.004 | 85.5 | 93.5 |

The concentration of hydrogen fluoride in each of the electrolytes used in Examples 1 to 9 was measured. The results were also shown in Tables 1 and 2.

After injecting the electrolyte, the battery cover 14, safety valve mechanism 15, and PTC device 16 were caulked via the gasket 17 to the battery can 11, thereby obtaining a cylindrical secondary battery having a diameter of 17.9 mm and a height of 64 mm. By the above method, twenty secondary batteries each for Examples 1 to 9 were produced. The secondary batteries were produced under the same conditions except for the kind and concentration of the lithium salt.

Ten secondary batteries of each of Examples 1 to 9 were repeatedly charged and discharged at room temperature and the charging and discharging cycle characteristic was examined. The charging was performed by a constant current of 1A until the battery voltage reaches 4.2V and then by a constant voltage of 4.2V until the total charging time reaches seven hours. On the other hand, the discharging was performed by a constant current of 400 mA until the battery voltage reaches 2.75V. The charging/discharging was performed for 200 cycles. The ratio of the discharge capacity in the 200$^{th}$ cycle to that in the 1$^{st}$ cycle, that is, the capacity maintaining ratio in the 200$^{th}$ cycle was calculated. Average values in Examples are shown in Tables 1 and 2.

The shelf stability characteristic of each of the other ten secondary batteries in Examples 1 to 9 was checked. The secondary batteries were stored in a constant temperature bath of 45 degrees for 30 days. The ratio of the discharge capacity after the storage to the discharge capacity before the storage, that is, a storage capacity maintaining ratio after 30 days was calculated with respect to each of the secondary batteries. The charging and discharging was performed under the same conditions as those in the case of obtaining the cycle characteristic. Average values of Examples are also shown in Tables 1 and 2.

In Comparative Examples 1 to 3 of Examples 1 to 9, secondary batteries were produced in a manner similar to Examples 1 to 9 except that each of LiPF6, $LiBF_4$ and $LiAsF_6$ was dissolved in a nonaqueous solvent at a concentration shown in Table 3. Table 3 shows the results of measuring the concentration of hydrogen fluoride in the electrolyte used in each of Comparative Examples 1 to 3. The charging/discharging cycle characteristic and the shelf stability characteristic of each of the obtained secondary batteries were examined in a manner similar to Examples 1 to 9. Average values of them are also shown in Table 3.

**EP 1 109 243 A2**

[Table 3]

| Comparative Example | Lithium Salt(mol/dm$^3$) | | | | Concentration of hydrogen fluoride (% by weight) | Capacity maintaining ratio(%) | |
|---|---|---|---|---|---|---|---|
| | $LiN(CF_3SO_2)_2$ | $LiPF_6$ | $LiBF_4$ | $LiAsF_6$ | | 200th cycle | stored for 30 days |
| 1 | - | 1.00 | - | - | 0.005 | 31.0 | 23.1 |
| 2 | - | - | 1.00 | - | 0.005 | 32.2 | 25.5 |
| 3 | - | - | - | 1.00 | 0.005 | 31.2 | 23.5 |
| 4 | 1.00 | 0.10 | - | - | 0.004 | 62.8 | 58.8 |
| 5 | 1.00 | - | 0.10 | - | 0.004 | 63.0 | 59.7 |
| 6 | 1.00 | - - | - | 0.10 | 0.004 | 62.8 | 59.0 |
| 7 | 1.00 | 0.11 | - | - | 0.005 | 42.0 | 36.6 |
| 8 | 1.00 | - | 0.11 | - | 0.005 | 45.1 | 38.1 |
| 9 | 1.00 | - | - | 0.11 | 0.005 | 43.1 | 35.2 |

Further, as Comparative Examples 4 to 9 of Examples 1 to 9, secondary batteries were produced in a manner similar to Examples 1 to 9 except that $LiN(CF_3SO_2)_2$ was dissolved in a nonaqueous solvent at a concentration of 1 mol/dm$^3$ and $LiPF_6$, $LiBF_4$ or $LiAsF_6$ was dissolved at a concentration shown in Table 3. Table 3 shows the results of measuring the concentration of hydrogen fluoride in the electrolyte used in each of Comparative Examples 4 to 9. In a manner similar to Examples 1 to 9, the charging/discharging cycle characteristic and the shelf stability characteristic of each of the obtained secondary batteries were examined. Average values of them are also shown in Table 3.

As understood from Tables 1 to 3, the capacity maintaining ratio in the 200th cycle in any of Examples 1 to 9 is higher than 85%. In contrast, the capacity maintaining ratio in any of Comparative Examples 1 to 9 is equal to or lower than 63%. It is therefore found that the excellent charging/discharging cycle characteristic can be obtained in Examples. On the other hand, the storage capacity maintaining ratio after 30 days is equal to or higher than 93% in Examples 1 to 9 but is lower than 60% in Comparative Examples 1 to 9. It is found that the excellent shelf maintaining characteristic can be obtained in Examples.

When Examples 1 to 4 and Comparative Examples 1 to 3 are compared with each other, the capacity maintaining ratio in the 200th cycle and the storage capacity maintaining ratio after 30 days of the secondary batteries using $LiN(CF_3SO_2)_2$, $LiN(C_2F_5SO_2)_2$, $LiC(CF_3SO_2)_3$, and $LiC(C_2F_5SO_2)_3$ as a lithium salt are higher as compared with the others. That is, it is found that, by using any of the lithium salts, a secondary battery having a negative electrode containing silicon or a silicon compound can have the excellent charging/discharging cycle characteristic and shelf stability characteristic.

Further, when Examples 5 to 8 and Comparative Examples 4 to 9 are compared with each other, when the concentration of $LiPF_6$, $LiBF_4$ or $LiAsF_6$ in the electrolyte becomes equal to or higher than 0.1 mol/dm$^3$, both the capacity maintaining ratio in the 200th cycle and the storage capacity maintaining ratio after 30 days suddenly deteriorate. That is, it is found that, by setting the concentration of any of the above materials to be lower than 0.1 mol/dm$^3$, a secondary battery having a negative electrode containing silicon or a silicon compound can obtain the excellent charging/discharging cycle characteristic and shelf stability characteristic. In addition, it is also found from Example 9 that even when $LiPF_6$, $LiBF_4$ and $LiAsF_6$ are mixed and used, by setting the total concentration of them to be lower than 0.1 mol/dm$^3$, the charging/discharging cycle characteristic as excellent as those of other Examples 1 to 8 can be obtained.

In each of Comparative Examples 1 to 9, the capacity maintaining ratio after 30 days is lower than the capacity maintaining ratio in the 200th cycle. The reason can be considered that since the batteries were stored in the environment of 45 degrees, decomposition of $LiPF_6$, $LiBF_4$ or $LiAsF_6$ was promoted, the generation amount of hydrogen fluoride accordingly increases, and the dissolution of $Si_2N_2O$ was promoted.

Examples 10 to 12

Secondary batteries were produced in a manner similar to Example 1 except that hydrogen fluoride is added to the electrolyte and the concentration of hydrogen fluoride in the electrolyte was changed as shown in Table 4. In Examples 10 to 12 as well, the charging/discharging cycle characteristic and the shelf stability characteristic of each of the obtained secondary batteries were examined in a manner similar to Example 1. Average values are shown in Table 4.

[Table 4]

|  | $LiN(CF_3SO_2)_2$ (mol/dm$^3$) | Concentration of hydrogen fluoride (% by weight) | Capacity maintaining ratio(%) | |
|---|---|---|---|---|
|  |  |  | 200$^{th}$ cycle | stored for 30 days |
| Example 10 | 1.00 | 0.010 | 88.0 | 94.4 |
| Example 11 | 1.00 | 0.040 | 85.0 | 93.6 |
| Example 12 | 1.00 | 0.050 | 75.1 | 74.0 |

As understood from Table 4, both the capacity maintaining ratio in the 200$^{th}$ cycle and the storing capacity maintaining ratio after 30 days in each of Examples 10 and 11 are more excellent than those of Example 12. That is, it is found that, by setting the concentration of hydrogen fluoride in the electrolyte to be lower than 0.05 percent by weight, the more excellent charging/discharging cycle characteristic can be obtained.

Although not specifically describe here, similar results can be obtained also in the case where another silicon compound or silicon other than $Si_2N_2O$ is used as the material of the negative electrode. Similar results can be also obtained by using a mixture of silicon and a silicon compound as a negative electrode material. Further, similar results can be also obtained by using other lithium salts expressed by Chemical Formulas 3 and 4.

Although the invention has been described by the foregoing embodiment, the invention is not limited to the embodiment and the examples but can be variously modified. For example, although the secondary battery using the liquid electrolyte has been described in the embodiment, the invention can be also applied to a case using other electrolytes such as a gel-state electrolyte obtained by allowing a high polymer compound to hold a nonaqueous solvent in which a lithium salt is dissolved, a solid-state electrolyte obtained by dispersing a lithium salt in a high polymer compound having ion conductivity, and an electrolyte obtained by allowing a solid-state inorganic conductor to hold a lithium salt. In the case where a high polymer compound is allowed to hold a nonaqueous solvent in which a lithium salt is dissolved, any of a high polymer compound having ion conductivity and a high polymer compound having no ion conductivity may be used.

In the foregoing embodiment and examples, an example of the cylindrical secondary battery having the rolled structure has been specifically described. The invention can be also applied to a cylindrical secondary battery having other configuration. In addition, the invention can be similarly applied to a secondary battery having a shape other than the cylindrical shape, such as a coin shape, a button shape, or a rectangular shape.

In the secondary battery according to the invention, a concentration of at least one of $LiPF_6$, $LiBF_4$ and $LiAsF_6$ in the electrolyte is set to be lower than 0.1 mol/dm$^3$. Consequently, production of hydrogen fluoride due to decomposition of any of the above materials is suppressed and the concentration of hydrogen fluoride in the electrolyte can be suppressed. Even though the negative electrode contains silicon or a silicon compound, deactivation of the negative electrode can be therefore prevented. Thus, high energy density can be obtained, and the charging/discharging cycle characteristic and the shelf stability characteristic can be improved.

In the secondary battery according to the invention, at least one of lithium salts expressed by Chemical Formulas 1 and 2 is contained. Consequently, excellent chemical stability is achieved and high ion conductivity is obtained. The concentration of hydrogen fluoride in the electrolyte can be therefore suppressed and, even when the negative electrode contains silicon or a silicon compound, deactivation of the negative electrode can be prevented. Thus, high energy density can be obtained, and the charging/discharging cycle characteristic and the shelf stability characteristic can be improved.

Obviously many modifications and variations of the present invention are possible in the light of the above teachings. It is therefore to be understood that within the scope of the appended claims the invention may be practiced other wise than as specifically described.

**Claims**

1.    A secondary battery comprising a positive electrode, a negative electrode, and an electrolyte, wherein the negative electrode contains silicon (Si) or a silicon compound, and the electrolyte contains at least one material selected from the group consisting of lithium hexafluorophosphate ($LiPF_6$), lithium tetrafluoroborate($LiBF_4$) and lithium hex-

afluoroarsenate(LiAsF$_6$) in a total concentration lower than 0.1 mol/dm$^3$.

2. A secondary battery according to claim 1, wherein the electrolyte is a lithium salt dissolving into nonaqueous solvent, and a concentration of hydrogen fluoride (HF) in nonaqueous solvent is lower than 0.05 percent by weight.

3. A secondary battery according to claim 1, wherein the silicon compound contained in the negative electrode is at least one material selected from the group consisting of SiO, SiO$_2$, SiC, SiB$_4$, SiB$_6$, Si$_3$N$_4$, Si$_2$N$_2$O, CaSi$_2$, CoSi$_2$, CrSi$_2$, Cu$_5$Si$_2$, Cu$_5$Si, FeSi$_2$, Mg$_2$Si, MnSi$_2$, MoSi$_2$, NbSi$_2$, NiSi$_2$, TaSi$_2$, TiSi$_2$, VSi$_2$, WSi$_2$ and ZnSi$_2$.

4. A secondary battery comprising a positive electrode, a negative electrode, and an electrolyte, wherein the negative electrode contains silicon (Si) or a silicon compound, and the electrolyte contains at least one material selected from the group consisting of a lithium salt expressed by Chemical Formula 1 and a lithium salt expressed by Chemical Formula 2.

[Chemical Formula 1]

$$LiNR_1R_2$$

where, R$_1$ denotes either fluorine (F), C$_a$F$_b$H$_{2a+1-b}$-SO$_2$ or C$_a$F$_b$H$_{2a+1-b}$-O-SO$_2$, each of a and b denotes a natural number satisfying the relation of b≤2a+1, R$_2$ denotes either C$_c$F$_d$H$_{2c+1-d}$-SO$_2$, or C$_c$F$_d$H$_{2c+1-d}$-O-SO$_2$, and each of c and d denotes a natural number satisfying the relation of d≤2c+1.

[Chemical Formula 2]

$$LiCR_3R_4R_5$$

where, R$_3$ denotes either fluorine(F), C$_e$F$_f$H$_{2e+1-f}$-SO$_2$ or C$_e$F$_f$H$_{2e+1-f}$-O-SO$_2$, each of e and f denotes a natural number satisfying the relation of f≤2e+1, R$_4$ denotes either C$_g$F$_h$H$_{2g+1-h}$-SO$_2$ or C$_g$F$_h$H$_{2g+1-h}$-O-SO$_2$, each of g and h denotes a natural number satisfying the relation of h≤2g+1, R5 denotes either C$_i$F$_j$H$_{2i+1-j}$-SO$_2$ or C$_i$F$_j$H$_{2i+1-j}$-O-SO$_2$ and each of i and j denotes a natural number satisfying the relation of j≤2i+1.

5. A secondary battery according to claim 4, wherein the electrolyte is a lithium salt dissolving into nonaqueous solvent, and a concentration of the lithium salt is between 0.4 mol/dm$^3$ and 2.0 mol/dm$^3$.

6. A secondary battery according to claim 4, wherein the electrolyte is a lithium salt dissolving into nonaqueous solvent, and a concentration of hydrogen fluoride (HF) in nonaqueous solvent is lower than 0.05 percent by weight.

7. A secondary battery according to claim 4, wherein the electrolyte contains at least one material selected from the group consisting of LiPF$_6$, LiBF$_4$ and LiAsF$_6$ in a total concentration lower than 0.1 mol/dm$^3$.

8. A secondary battery according to claim 4, wherein the silicon compound contained in the negative electrode is at least one material selected from the group consisting of SiO, SiO$_2$, SiC, SiB$_4$, SiB$_6$, Si$_3$N$_4$, Si$_2$N$_2$O, CaSi$_2$, CoSi$_2$, CrSi$_2$, Cu$_5$Si$_2$, Cu$_5$Si, FeSi$_2$, Mg$_2$Si, MnSi$_2$, MoSi$_2$, NbSi$_2$, NiSi$_2$, TaSi$_2$, TiSi$_2$, VSi$_2$, WSi$_2$ and ZnSi$_2$.

9. A secondary battery comprising a positive electrode, a negative electrode, and an electrolyte, wherein, the negative electrode has a structure of a strip shape in which a negative electrode mixture layer is provided on one side or both sides of a negative electrode collector layer made of copper foil, the negative electrode mixture layer containing a binder and a negative electrode material containing silicon (Si) or a silicon compound, the positive electrode has a structure of a strip shape in which a positive electrode mixture layer is provided on one side or both sides of a positive electrode collector layer made of aluminum foil, the positive electrode mixture layer containing a binder and a positive electrode material containing either a lithium composite oxide, a lithium composite sulfide or a lithium composite nitride, the negative electrode and the positive electrode are spirally wound on each other with a porous film of the polyolefin system holding the electrolyte or a high molecular compound holding the electrolyte in between, and the outermost periphery of the spirally-wound positive and negative electrodes is fixed by an adhesive tape containing an adhesive of the silicone system, and

the electrolyte contains at least one material selected from the group consisting of a lithium salt expressed by Chemical Formula 3 and a lithium salt expressed by Chemical Formula 4.

[Chemical Formula 3]

$$LiNR_1R_2$$

where, $R_1$ denotes either fluorine (F), $C_aF_bH_{2a+1-b}$-$SO_2$ or $C_aF_bH_{2a+1-b}$-O-$SO_2$, each of a and b denotes a natural number satisfying the relation of $b \leq 2a+1$, $R_2$ denotes either $C_cF_dH_{2c+1-d}$-$SO_2$, or $C_cF_dH_{2c+1-d}$-O-SO2, and each of c and d denotes a natural number satisfying the relation of $d \leq 2c+1$.

[Chemical Formula 4]

$$LiCR_3R_4R_5$$

where, $R_3$ denotes either fluorine(F), $C_eF_fH_{2e+1-f}$-$SO_2$ or $C_eF_fH_{2e+1-f}$-O-$SO_2$, each of e and f denotes a natural number satisfying the relation of $f \leq 2e+1$, R4 denotes either $C_gF_hH_{2g+1-h}$-$SO_2$ or $C_gF_bH_{2g+1-h}$-O-$SO_2$, each of g and h denotes a natural number satisfying the relation of $h \leq 2g+1$, $R_5$ denotes either $C_iF_jH_{2i+1-j}$-$SO_2$ or $C_iF_jH_{2i+1-j}$-O-$SO_2$ and each of i and j denotes a natural number satisfying the relation of $j \leq 2i+1$.

10. A secondary battery according to claim 9, wherein the electrolyte is a lithium salt dissolving into nonaqueous solvent, and a concentration of the lithium salt is between 0.4 mol/dm³ and 2.0 mol/dm³.

11. A secondary battery according to claim 9, wherein the electrolyte is a lithium salt dissolving into nonaqueous solvent, and a concentration of the hydrogen fluoride (HF) in nonaqueous solvent is lower than 0.05 percent by weight.

12. A secondary battery according to claim 9, wherein the electrolyte contains at least one material selected from the group consisting of $LiPF_6$, LiBF4 and $LiAsF_6$ in a total concentration lower than 0.1 mol/dm³.

13. A secondary battery according to claim 9, wherein the silicon compound contained in the negative electrode is at least one material selected from the group consisting of SiO, $SiO_2$, SiC, $SiB_4$, $SiB_6$, $Si_3N_4$, $Si_2N_2O$, $CaSi_2$, $CoSi_2$, $CrSi_2$, $Cu_5Si_2$, $Cu_5Si$, $FeSi_2$, $Mg_2Si$, $MnSi_2$, $MoSi_2$, $NbSi_2$, $NiSi_2$, $TaSi_2$, $TiSi_2$, $VSi_2$, $WSi_2$ and $ZnSi_2$.

14. A secondary battery according to claim 9, wherein the negative electrode material contains carbon materials, and the positive electrode material contains graphite as a conducting agent.

15. A secondary battery according to claim 14, wherein the negative electrode material is at least one material selected from the group consisting of pyrolytic carbon, cokes, graphite, carbon black, glass - like carbon, high molecular organic compound calcined materials, carbon fiber and activated carbon.

16. A secondary battery according to claim 9, wherein the positive electrode material is at least one material selected from the group consisting of $LiMn_2O_4$, $Li_{1+p}Mn_{2-p}O_4$, $LiMn_{2-p}Cr_pO_4$, $LiMn_{2-p}Co_pO_4$, $LiCoO_2$, $LiNiO_2$ and $LiNi_pCo_{1-p}O_2$ (in any of these chemical formulas, 0<p<1).

FIG.1